# EUROPEAN PATENT APPLICATION

(11) **EP 4 625 327 A1**
(43) Date of publication of application: **01.10.2025**
(21) Application number: 24166072.9
(22) Date of filing: 25.03.2024
(51) Int. Cl.: G06T 11/00, G09G 5/00, H04N 1/60

(54) **IMAGE PROCESSING**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented image processing method is described which comprises identifying a degree of similarity between two or more hues as viewed by a colour vision deficient viewer, and determining the two or more hues to be problem hues if the degree of similarity satisfies a similarity criterion. For one or more of the problem hues, a colour group is defined, the colour group including the problem hue and related hues within a colour range of the problem hue. Subsequently, when video images are received, for one or more of the colour groups, one or more regions in a received image having a hue corresponding to that colour group are identified, and a pattern is applied to those regions. In this way, patterns are applied only to regions of the image having a hue within a defined colour group containing a problem hue. As a result, the part of the image formerly represented only by the problem colour is now represented by a pattern, which is easily discernible by a colour-blind viewer. Regions of the image which do not contain a problem hue are not patterned in this way, and so the majority of the image remains unchanged.

## Description

The present disclosure relates to image processing. Embodiments of the present disclosure relate to an apparatus and a method for processing images to correct for a colour vision deficiency.

### BACKGROUND

Roughly 8% of men and 0.4% of women are colour blind. There are different types of colour blindness (or Colour Vision Deficiency, CVD) and, while it is extremely rare for someone to be unable to see any colour at all, most colour blind people are unable to fully 'see' red, green or blue light.

Colour Vision Deficiencies are usually split into the following types: Anomalous Trichromacy (all three cones in the eye are present, but one may be faulty), Protanomaly (reduced sensitivity to red light), Deuteranomaly (Reduced sensitivity to green light), Tritanomaly (Reduced sensitivity to blue light (this is extremely rare and usually ignored)), Dichromacy (the absence of a cone in the eye, with any colours varying only in the missing dimension (e.g. red) being confused), Protanopia (Unable to perceive red light), Deuteranopia (Unable to perceive green light) and Tritanopia (Unable to perceive blue light).

Watching some television content, such as sport, can become difficult for colour blind viewers because colours worn by competing teams can be difficult to tell apart if the viewer has trouble distinguishing between greens and reds.

Embodiments of the present invention seek to provide a method of modifying video content in a manner which provides better colour distinguishability for a colour blind user, whilst also leaving the image mostly unchanged to a trichromatic (full colour) viewer.

The examples described herein are not limited to examples which solve problems mentioned in this background section.

### SUMMARY

Various aspects and features of the invention are as set out in the accompanying independent and dependent claims.

According to an aspect of the present invention, there is provided a computer implemented image processing method, comprising:
identifying a degree of similarity between two or more hues as viewed by a colour vision deficient viewer, and determining the two or more hues to be problem hues if the degree of similarity satisfies a similarity criterion;
for one or more of the problem hues, defining a colour group, the colour group including the problem hue and related hues within a colour range of the problem hue;
receiving video images; and
for one or more of the colour groups, identifying one or more regions in a received image having a hue corresponding to that colour group, and applying a pattern to those regions.

In this way, patterns are applied only to regions of the image having a hue within a defined colour group containing a problem hue. As a result, the part of the image formerly represented only by the problem colour is now represented by a pattern, which is easily discernible by a colour-blind viewer. Regions of the image which do not contain a problem hue are not patterned in this way, and so the majority of the image remains unchanged. Different patterns can be applied to different problem hues, if necessary - although in the case of only two confusingly similar hues (and variants thereof) being present in the image, it may only be necessary to apply a pattern in relation to one of the two.

The method may consider just a pair of similar (problem) hues, or three or more problem hues all of which could be confused with each other. The similarity criterion may be the satisfaction of a similarity threshold - for example that a colour distance between the plural hues is less than a threshold distance in a particular colour space, or that both (or all) of the possible problem hues fall within a defined region of colour space.

The method may further comprise, for said one or more of the colour groups, generating a mask for the received image, the mask defining pixels within the received image having a colour value corresponding to that colour group, and within areas of the received image corresponding to the generated mask, applying the pattern. The method may comprise overlaying the pattern onto the mask.

The method may comprise selecting a colour for the pattern, wherein the pattern colour is user selectable. In addition, the pattern itself (for example diagonal lines, of a particular direction, dots, hatching and the like) may be user selectable. Where there are two colours capable of being confused by the colour deficient viewer, the method may automatically pick the one to apply a pattern to.

The pattern colour may be may be selected automatically or semi-automatically to contrast with the colour group. The pattern colour may be selected automatically by linearly interpolating between a base colour of the colour group and its direct opposite on a dichromatic colour wheel.

The method may comprise applying the pattern to the received image with an opacity which is dependent on the saturation and/or value of the underlying pixels. For example, a relatively low opacity may be applied when the saturation and/or value is relatively low and a relatively high opacity may be applied when the saturation and/or value is relatively high.

The method may comprise converting the problem hue to a HSV (Hue-Saturation-Value) colour space, and identifying the related hues of the corresponding colour group based on a tolerance range around the problem hue. The tolerance range may be a range of saturation and/or value in the HSV colour space around the problem hue.

The method may comprise storing the selected pattern in association with the colour group, and subsequently retrieving the stored pattern for use with a subsequently received sequence of video images containing hues corresponding to that colour group.

The method may comprise displaying the stored pattern to the user, and receiving a user input indicating whether the stored pattern should be used to replace the problem hue.

The method may comprise identifying a type of colour vision deficiency, wherein the similarity between the selected hues is identified in dependence on the identified type of colour vision deficiency. In one example, the method comprise receiving a user selection of a particular type of colour vision deficiency as the identified type of colour vision deficiency.

The method may comprise displaying the selected hues to the user, and receiving a user input indicating whether one or both of the selected hues should be replaced or augmented with the pattern, and applying the pattern in dependence on the user input.

According to another aspect of the invention, there is provided an image processing apparatus, comprising
an input configured to receive video images;
a processor configured to
identify a degree of similarity between two or more hues as viewed by a colour vision deficient viewer, and determine the pair of hues to be problem hues if the degree of similarity satisfies a similarity criterion;
for one or more of the problem hues, define a colour group, the colour group including the problem hue and related hues within a colour range of the problem hue; and
for one or more of the colour groups, identify one or more regions in a received image having a hue corresponding to that colour group, and apply a pattern to those regions.

The pattern may be selectable (by a user) between a relatively high density pattern and a relatively low density pattern.

Preferably, the space occupied by the pattern is less than or equal to approximately 50% of the mask area.

Preferably, the pattern mask is recomputed for each video image in the sequence. This enables the patterns to move with the underlying regions having a problematic hue, and for the opacity and/or colour to change if there are hue changes (for example different lighting) on those regions as new image frames are received.

The pattern may be applied with a colour which contrasts with the colour group.

The method may comprise simulating a view of the selected hues of interest, and identifying a similarity between the selected hues of interest within the simulated view. The simulating a view may comprise rendering one or more still or video images which include the selected hues of interest.

Also provided is a computer program, which when executed on a data processing apparatus causes the data processing apparatus to carry out a method according to the above.

The invention applies to the consumption of video content on digital media devices. In the case of sports for example, team jerseys can appear very similar to a colour deficient viewer making them hard to distinguish and the sport hard to follow accurately. The algorithm identifies these problem colours (in this case the colour ranges of each team jersey form a colour group) and rotates within a defined naturalness limit to make them to be more spatially distinct in the colour space, causing the colour-blind viewer to have better colour distinguishability whilst also leaving the image mostly unchanged to the trichromatic (full colour) viewer.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Embodiments of the invention apply a visual effect to digital media devices to improve colour discrimination for colourblind viewers. The algorithm identifies problem colours which then have patterns (for example diagonal stripes) overlaid onto them with varying opacity, pattern and contrast (with respect to the original colour) depending on the desired effect. This acts as a proxy for the missing colour dimension and increases the colour recognition speed and contrast whilst still leaving the colours of the image intact, maintaining a desirable viewing experience.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of an image processing apparatus for implementing the present technique;
FIG. 2 is a schematic flow diagram of the overall method of applying a pattern to identified colour ranges within an image;
FIG.3 is a schematic flow diagram of a pattern generation method; and
FIG. 4 is a schematic view of an image frame before and after the application of the pattern according to the method of Figures 2 and 3.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

A variety of techniques have been developed to adapt colours in an image in order to improve colour perception by a colour blind viewer, many of which are based on Daltonization . Daltonization aims to move colours which look identical to a person with CVD in "opposite" directions in the colour space so that they are distinguishable. Other methods add graphical effects to the content, such as coloured outlines, adding noise or overlaying colour names.

The traditional TV production process, in which a single version of a programme is delivered to every viewer, is evolving to enable programmes to be personalised through, for example, the selection of a different audio track or the ability to access supplementary information. Object-Based Media (OBM) is an umbrella term for the production, delivery and consumption of media experiences which are assembled from a variety of 'objects', thus allowing multiple versions of programmes to be easily created. This creates the opportunity for a particular Daltonization process to be applied to a TV programme and delivered to an individual or a specific group of viewers.

In "Using Patterns to Encode Color Information for Dichromats", Behzad Sajadi, Aditi Majumder, Manuel M. Oliveira et al, the authors propose using patterns to convey colour information for individuals with CVD. The document proposes pattern overlays being applied across the entire image (or video frame) - they are not limited to specific problematic colours only. The authors claim the approach '*minimizes color ambiguities in the perceived content*' and '*retains the underlying color information and hence does not hamper color perception for normal trichromats'*. Whilst this is true for colour, clearly a whole image consisting of overlayed patterns has a significant impact on the overall image quality for all viewers.

In contrast, the present technique, by limiting the application of processing to problematic colours in context, has the significant advantage of minimising the overall visual impact to normal trichromats (non CVD).

In "Improving Colour Identification for People with Impaired Colour Vision", David R. Flatla, Alan R. Andrade, Ross D. Teviotdale et al, three colour identification techniques are proposed: 'colour name', 'colour meter' and 'colour popper'. With 'colour name', an image is reduced to a restricted palette of colours and the names of the colours are overlayed on the image according to a suitably sized naming region (area or grid). With 'colour meter', instead of colour names, small lines are overlayed with the angle of the line representing the hue, and the length of the line representing the chroma. Whilst these are interesting solutions in providing tools to CVD users to aid colour identification in still images, the naming and metering approaches as proposed are generally ill-suited to video; a user simply does not have time to process the amount of information usefully when applied to a series of video frames. With 'colour popper', this provides users with the ability to select a colour in an image and pixels that map to that colour (from a restricted palette of 11) are enhanced for the CVD viewer whilst others are (effectively) significantly darkened (the elected colour 'pops' out). This solution clearly causes significant overall 'harm' to image fidelity.

In contrast to the above prior methods, the present technique applies patterns specifically (and only) to a restricted problematic colour range (hues) within a sequence of video images, and applies the patterns in a specific way suitable for video sequences.

In "Improving Colour Patterns to Assist People with Colour Vision Deficiency", Connor Geddes, David R. Flatla, Garreth W. Tigwell et al, the techniques described in the latter paper and built on by introducing two new methods: `colour iconiser' and 'colour mix'. Colour iconiser uses 10 icons to represent 11 colours (black and grey use the same icon) whilst colour mix uses just 4 symbols to represent red, yellow, green and blue. This coarse quantisation of colour identification proves to be both advantageous and detrimental. With the iconizer approach a large amount of the screen will be taken in order to render the icons over top of the image and this could very likely distort the image or cause some information to be lost, whilst the colour mix approach has the same drawbacks as colour meter whereby the symbols can be very difficult to learn and distinguish.

In contrast, the present technique seeks to address these issues by way of selective application of a pattern, since the overlay is restricted to main areas of confusion that are important in the context of the video material. When this is further supplemented by other features such as variable opacity / transparency with respect to the original material and complementary pattern colour, the technical effect is expected to be greatly enhanced beyond that achieved in the prior art.

The invention has the most effective implementation when applied to a context where colour is used to carry information, and the colour itself is secondary to this fact. For example, resistor codes are labelled by colour, however the colour serves only as a signifier and is not important itself. Resistors themselves are small, and as such identifying the correct colours can be challenging even for full colour viewers. The proposed invention identifies colours that are hard to distinguish for the viewer and applies patterns of adjustable strength to these colour groups, allowing the resistor codes to be quickly and easily read. Additionally, the same filter can then be applied to the resistor code table, making a consistent match up, and quick code translation.

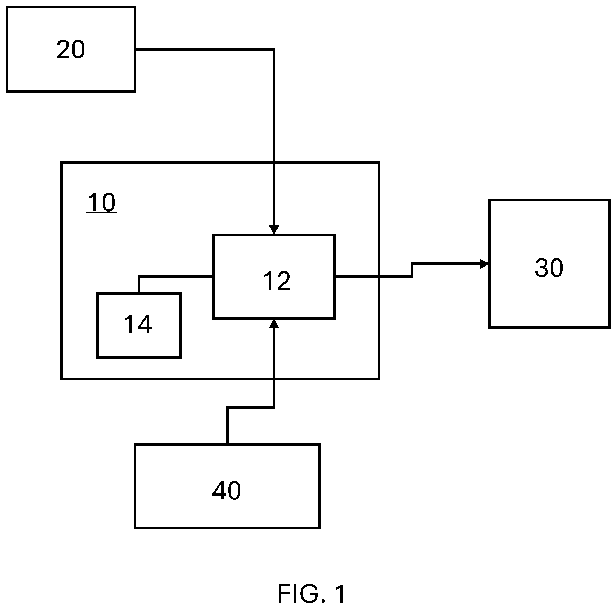

Referring to Figure 1, an example apparatus for implementing the present technique is shown. In Figure 1, a data processing apparatus 10 can be seen to comprise a processor 12 and a memory 14. The data processing apparatus 10 receives video data from a video server 20 (this may be received over the Internet for example), and is able to render this for display on a display 30. The data processing apparatus 10 may for example be a portable electronic device such as a smartphone or tablet device, a laptop or desktop computer, a television, or a set top box for connection to a television. A user interface 40 (which may for example include a keyboard and mouse, or a touch screen on the display 30, or a television remote control) is provided, via which a user / viewer is able to control the image processing method, as well as the apparatus 10 more generally. The processor 12 is responsible for adjusting the received video data to apply patterns to problem colours in a manner that makes those colours (or those parts of the image) more distinguishable from other colours for a colour deficient viewer.

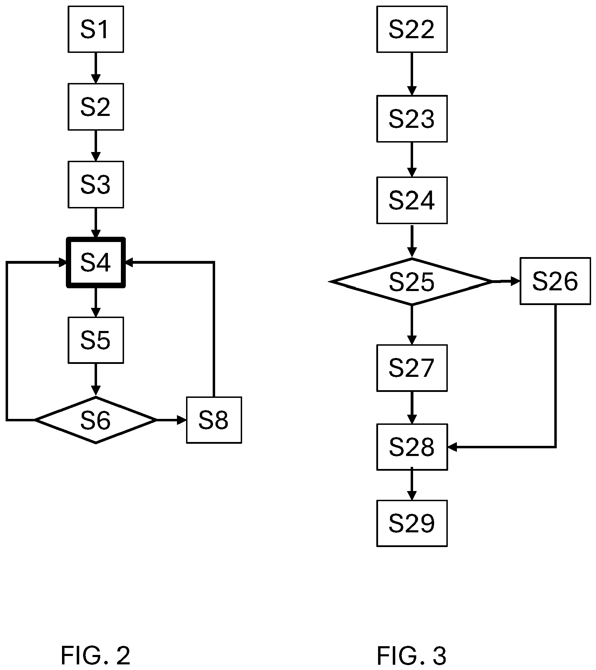

Referring to Figure 2, a method of image processing carried out by the apparatus of Figure 1 is shown. For exemplary purposes the present technique will be described with reference to the consumption of video content on digital media devices. In the case of sports for example, team jerseys can appear very similar to a colour deficient viewer making them hard to distinguish and the sport hard to follow accurately. The method described with reference to Figure 2 identifies these problem colours (in this case the colour ranges of each team jersey form a colour group) and applies a pattern to the image in the region of the problem colours.

At a step S1 the user inputs their CVD (Colour Vision Deficiency) type via the user interface 40. The CVD type may be selectable via a menu which presents the user with a list of the available colour vision deficiency types. The selected CVD type feeds into certain stages of the technique, including the identification of problem hue-pairs. At a step S2, problematic colours (hues) are identified. In one example the colours that are likely to be problematic to the viewer are identified by simulating the CVD view of the prominent colours in the video (which may for example be received from the video server 20), with the simulation taking into account the user selected type of colour vision deficiency. In this way it is possible to see the image from the perspective of a colour deficient viewer. Algorithms for simulating colour vision deficiency views of input images are well known in the art. If the CVD simulated colours are too similar, they are seen to be problematic, and their hue data is extracted and added to a list of problem hues.

The similarity between a pair (or more) of colours could be determined in various ways. For example, the similarity between the colours may be determined to satisfy a similarity criterion if those colours are identified as falling within the same MacAdam ellipse in CIE LUV space. A MacAdam ellipse represents regions of colour that trichromats perceive to be the same. The similarity could also be measured by distance in a colour space (RGB, HSV or LUV), or more simply a minimum distance of separation along the dichromat line in the LUV space can be defined, in either of which case the similarity criterion may be that the separation distance (within a particular colour space) is less than a (predetermined) threshold value.

For most use cases, such as football, it is expected either that the probable problem colours are informed in advance (for example by indicating what the teams/colours are) or that the user is shown the candidate colours based on an analysis of the simulated image, and is able to select which groups are useful to them, with the selected groups being processed at the next stage.

After the problem hues are defined, the algorithm then creates colour groups of the defined problem hues and a tolerance range around each hue. A tolerance range is used (rather than just the problem hue alone) because an identified colour will vary in hue due to changes in scene conditions such as brightness, contrast, and saturation. The problem hues (including those within the tolerance range) are to be addressed by the application of patterns instead of the whole colour gamut of the video, leaving most colours unchanged. Through this the image naturalness is better maintained than other approaches because only a subset of the video is changed.

The tolerance range defining the boundary of a colour group may be defined in any colour space, but HSV may be favoured for ease of selection. If so, this may require a transformation of the problem hues into HSV space if initially defined in RGB space for example. All three measurements, or axes, of such colour space may be used. In this case, colour groups may each represent a cube of HSV values. The determination may be purely empirical, defined by the user or an eternal agent until the group encapsulates the desired image contents.

Colour groups can be identified based on a given piece of media, but due to the colour selective nature of the process the resulting algorithm can then be applied to any instance where the problem colours are present, regardless of the other colour content. For example, if for a video game, the colours brown and green are found to be conflicting, the resulting colour-pattern pairs can be applied to other instances (video, image etc.) where these conflict pairs arise.

At a step S3, the problem colours are indicated to the user to decide for themselves if they are problematic. If not, the process ends. As colour blindness varies even among those of the same classification, allowing user input ensures a minimally invasive colour compensation that will not affect any unnecessary colour groups.

Once problem colour groups have been defined and the user has confirmed that a pattern should be applied to improve distinguishability, at a step S4 the patterns are generated. The step S4 is illustrated in more detail in Figure 3, which is now described.

At a step S22, the colour groups, originally specified in RGB colour space, are converted to HSV colour space. The colour groups are defined in the HSV space to create cleaner divisions between the colour groups. Within the HSV colour space, the saturation (S) and value (V) are considered as part of the limit. This means that saturation and value (not just hue) also define limits, creating a cube of defined colours in the HSV Space. This reduces problems of multiple groups sharing greyscale points like 0 saturation or value. This is done to prevent "neutral" colours (such as values with extreme S or V values wherein the hue is inconsequential) from having patterns applied, as these are rarely problematic for the user.

At a step S23 binary masks are created for each colour group from the image (content) being adjusted. The binary mask may be denoised or filtered, for example to remove single pixels and small image regions (which would be too small to meaningfully support the application of a pattern).

Patterns are applied to the content by creating a binary mask of all colours within the accepted colour group boundaries.

S24 the user can then select the patterns they would like to assign to each colour group, such as diagonal stripes, hatching, dots (pattern type) and pattern colour. If the identified colour group has been compensated for before, the previously assigned pattern is suggested to minimize reassociation required by the user.

To further allow for customization to both the naturalness and strength of the technical effect, the pattern colour can also be controlled. This is carried out at steps S25, S26 and S27. To encompass a wide number of use cases, options for both content dependent and independent colour assignment are possible. At the step S25, it is determined whether the pattern colour type is content dependent.

In the case of a content dependent usage, the step S26 is carried out, in which the pattern colour to be applied over a problem colour group is based off the colour center of that group, allowing for strength and naturalness variance by controlling how far the pattern colour deviates from the base colour. This is done by linear interpolation between the base colour, and its direct opposite on a dichromatic colour wheel. In the case of a content independent usage, the step S27 is carried out, in which a fixed colour is used for the pattern, typically a monochromatic colour such as white or black that stands out against almost all other colours. A content independent approach (as favoured in prior art) requires less processing and a more consistent effect, however, reduces naturalness, while the content dependent approach further maintains image naturalness and sentiment, but at the cost of computation expense.

At a step S28 patterns are generated for each problem colour (group) and are applied to the binary masks (which may be one mask for each colour group). At a step S29 the opacity of each pattern is modified based on the saturation and hue values of the corresponding pixels of the image to which the pattern is being applied. This is to prevent the case where the patterns become over-relied upon, and thus cause loss of colour data through the overly wide range covered by a single pattern. It is therefore preferred to leverage variance of the opacity of the pattern as an additional means of conveying colour information. For cases of low saturation and value, pattern opacity is low, and increases to 100% for full saturation and value. By doing so, patterns appear less blocky and create more natural and gradual transitions into and out of patterns. The patterns themselves are preferably not rotated with hue as in existing techniques, as doing so is thought to overwhelm the user with too much information, and requires too much processing by the individual, detracting from the content. Instead, distinct patterns are used for each colour group, reducing ambiguity and user processing.

The pattern chosen by the user is then overlaid onto the mask, creating a clear distinction between colours in the group, and their conflicting colours.

At a step S6, the resulting pattern masks are remerged with the base image to apply the patterns to the content. In practice, this may mean replacing a pixel value with a pixel value corresponding to, or influenced by, the pattern.

This results in the inputted video images having patterns applied to regions of the image occupied by problem colour ranges. Once all the user inputs have been collected, the pattern masks are applied to the content at a step S6. As the masks vary depending on the colour content of each frame of media, the pattern masks are recomputed every frame. Only applying patterns to a subset of an image dramatically increases the processing speed as the corresponding patterns do not need to be calculated for the entire image. The need to recompute every frame also makes the system dynamic, allowing any setting to be changed in real time by the user or external party. By applying patterns only to problematic colour groups, the image is left largely unaltered, and reduces the information processing that must be done by the user to translate the pattern to its associated colour, as far fewer patterns are present. Preferably, the space occupied by a pattern does not exceed more than 50% of the mask. By doing this, significant obfuscation of the colours is avoided, maintain the original colours of the image (further maintaining image naturalness), and reduce unnecessary over-reliance on the patterns for colour identification. In the first instance, cases of colour confusion often result in a given colour being one of a few options, rather than being completely unclear. As such, the pattern alteration should serve as the secondary level of detail, (e.g brown rather than red or orange) rather than being the primary source of colour identification (e.g diagonal lines must mean brown).

At a step S7, it is determined whether the pattern (correction) strength is correct. If the pattern is applied too strongly this may detract from the content overall, whereas if the pattern is applied too weakly, the distinguishability of the problem coloured regions of the image may be insufficient. The primary mode of correction "strength" that can be applied is adjustment of pattern density and thickness by the user. By this it is meant both spacing between pattern repetitions, and the relevant size measurement (e.g., pixel thickness for line-based patterns, diameter for spherical or symbol-based patterns). By including a facility for this adjustment, the user or system is able to vary the contrast between the confusion colour and the pattern-applied colour. A larger density and thickness will produce a clearer pattern making for quicker distinction; however, a low spacing and small thickness/size can result in a less noticeable pattern whilst still providing a clear differentiation. Pattern density control is applied on a per-pattern basis if necessary, meaning that colours more important to the user can have their colour compromised in favour of distinguishability, and vice versa for colours where colour maintenance takes precedence. In any case, if at the step S27 it is determined that the correction strength is appropriate the process ends (for the present image frame, to be repeated for the next), whereas if the correction strength is not appropriate then the process returns to the step S24 for the user to adjust the pattern selection.

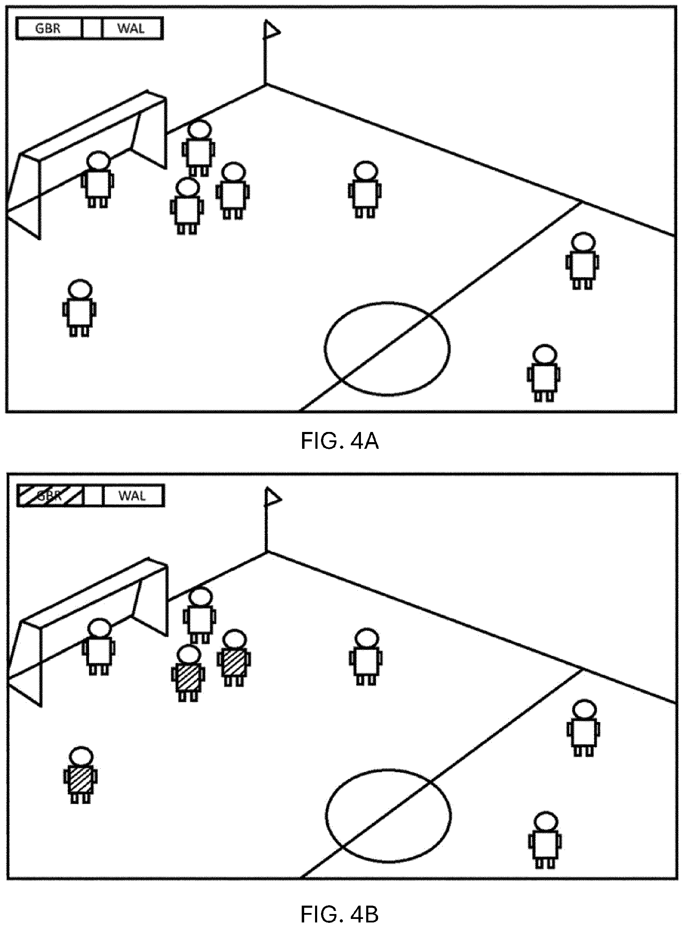

Referring to Figure 4, an example of the visual effect of applying the present technique is shown. Figure 4 shows before and after images including football players on a playing field. In Figure 4A, a single frame of original video content is shown. In this image frame it is not easy for the colour vision deficient viewer to discern which players belong to which team, making it hard for the viewer to track what is happening in the game. In Figure 4B, a striped pattern has been applied to the worn kit of the players of one team, based on the colour of their kit (which permits the relevant parts of the image do be identified and replaced). It can be seen that a colour deficient viewer will have no difficulty in distinguishing between players of the two teams following the application of the pattern. It can also be seen that the legend/key at the top left of the image has similarly been marked up with the applied pattern.

It will be appreciated that in some cases a relatively large number of problem colours may be identified, resulting in a large number of colour groups and applied patterns. In this case, pattern overlap blending can be implemented to create smoother transitions between the patterns of adjacent colour groupings. This would involve a method of pattern combination, wherein for cases where a colour lies near the border of two adjacent groups (in colour space), both patterns are applied to a pixel region of the image having this colour. Additionally, the sparsity of a given pattern can be increased as it moves closer to having more prevalence in one of the two groups. This provides higher hue distinction for cases of neighbouring confusion colour groups, however, does cause a risk of overcrowding the image and compromising image quality. Alternatively, the sparsity of a given pattern can be reduced as it moves closer to having more prevalence in one of the two groups.

## Claims

1. A computer implemented image processing method, comprising:
identifying a degree of similarity between two or more hues as viewed by a colour vision deficient viewer, and determining the two or more hues to be problem hues if the degree of similarity satisfies a similarity criterion;
for one or more of the problem hues, defining a colour group, the colour group including the problem hue and related hues within a colour range of the problem hue;
receiving of video images; and
for one or more of the colour groups, identifying one or more regions in a received image having a hue corresponding to that colour group, and applying a pattern to those regions.

2. The image processing method of claim 1, comprising, for said one or more of the colour groups, generating a mask for the received image, the mask defining pixels within the received image having a colour value corresponding to that colour group, and within areas of the received image corresponding to the generated mask, applying the pattern.

3. The image processing method of claim 1 or claim 2, comprising overlaying the pattern onto the mask.

4. The image processing method of any preceding claim, comprising selecting a colour for the pattern, wherein the pattern colour is user selectable.

5. The image processing method of any one of claims 1 to 3, wherein the pattern colour is selected automatically or semi-automatically to contrast with the colour group.

6. The image processing method of claim 5, wherein the pattern colour is selected automatically by linearly interpolating between a base colour of the colour group and its direct opposite on a dichromatic colour wheel.

7. The image processing method of any preceding claim, comprising applying the pattern to the received image with an opacity which is dependent on the saturation and/or value of the underlying pixels.

8. The image processing method of claim 7, wherein a relatively low opacity is applied when the saturation and/or value is relatively low and a relatively high opacity is applied when the saturation and/or value is relatively high.

9. The image processing method of any preceding claim, comprising converting the problem hue to a HSV (Hue-Saturation-Value) colour space, and identifying the related hues of the corresponding colour group based on a tolerance range around the problem hue in which the tolerance range is a range of saturation and/or value in the HSV colour space around the problem hue.

10. The image processing method according to any preceding claim, comprising storing the selected pattern in association with the colour group, and subsequently retrieving the stored pattern for use with a subsequently received sequence of video images containing hues corresponding to that colour group.

11. The image processing method according to any preceding claim, comprising identifying a type of colour vision deficiency, wherein the similarity between the selected hues is identified in dependence on the identified type of colour vision deficiency.

12. The image processing method of claim 11, comprising receiving a user selection of a particular type of colour vision deficiency as the identified type of colour vision deficiency.

13. The image processing method of any preceding claim, comprising displaying the selected hues to the user, and receiving a user input indicating whether one or both of the selected hues should be replaced or augmented with the pattern, and applying the pattern in dependence on the user input.

14. An image processing apparatus, comprising
an input configured to receive video images;
a processor configured to
identify a degree of similarity between two or more hues as viewed by a colour vision deficient viewer, and determine the two or more hues to be problem hues if the degree of similarity satisfies a similarity criterion;
for one or more of the problem hues, define a colour group, the colour group including the problem hue and related hues within a colour range of the problem hue; and
for one or more of the colour groups, identify one or more regions in a received image having a hue corresponding to that colour group, and apply a pattern to those regions.

15. A computer program, which when executed on a data processing apparatus causes the data processing apparatus to carry out a method according to any one of claims 1 to 13.
